(19) Europäisches Patentamt
European Patent Office
Office européen des brevets

(11) EP 3 898 265 B1

(12) FASCICULE DE BREVET EUROPEEN

(45) Date de publication et mention de la délivrance du brevet:
**08.02.2023 Bulletin 2023/06**

(21) Numéro de dépôt: **19845819.2**

(22) Date de dépôt: **10.12.2019**

(51) Classification Internationale des Brevets (IPC):
***B60C 1/00*** *(1968.09)*

(52) Classification Coopérative des Brevets (CPC):
(C-Sets disponibles)
**C08L 9/00; B60C 1/0016; B60C 11/005; B60C 11/0058; C08L 23/083;** B60C 2011/0025

(Cont.)

(86) Numéro de dépôt international:
**PCT/FR2019/052998**

(87) Numéro de publication internationale:
**WO 2020/128226 (25.06.2020 Gazette 2020/26)**

(54) **BANDE DE ROULEMENT POUR PNEUMATIQUE**

TREAD FOR AIRTIRE

LAUFFLÄCHE FÜR LUFTREIFEN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2018 FR 1873881**

(43) Date de publication de la demande:
**27.10.2021 Bulletin 2021/43**

(73) Titulaire: **COMPAGNIE GENERALE DES ETABLISSEMENTS MICHELIN**
**63000 Clermont-Ferrand (FR)**

(72) Inventeurs:
- **MERINO LOPEZ, José**
  **63040 CLERMONT-FERRAND CEDEX 9 (FR)**
- **ARAUJO DA SILVA, José Carlos**
  **63040 CLERMONT-FERRAND CEDEX 9 (FR)**
- **CROCHET, Aurore**
  **63040 CLERMONT-FERRAND CEDEX 9 (FR)**
- **HENNEBERT, Guillaume**
  **63040 CLERMONT-FERRAND CEDEX 9 (FR)**

(74) Mandataire: **Desbordes, Guillaume**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**EP-A1- 2 599 805 US-A1- 2013 324 660**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 898 265 B1

(52) Classification Coopérative des Brevets (CPC):
(Cont.)

C-Sets
**C08L 23/083, C08L 93/00, C08K 3/36**

## Description

### Domaine de l'invention

La présente invention a pour objet un pneumatique pour véhicules, et, en particulier, la bande de roulement d'un pneumatique pour véhicule.

### État de la technique

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien. Les expressions « radialement », « axialement » et « circonférentiellement » signifient respectivement « selon la direction radiale », « selon la direction axiale » et « selon la direction circonférentielle ».

Par « radialement intérieur, respectivement radialement extérieur », on entend « plus proche, respectivement plus éloigné de l'axe de rotation du pneumatique ». Par « axialement intérieur, respectivement axialement extérieur », on entend « plus proche, respectivement plus éloigné du plan équatorial du pneumatique », le plan équatorial du pneumatique étant le plan EP passant par le milieu de la surface de roulement du pneumatique et perpendiculaire à l'axe de rotation du pneumatique.

La bande de roulement est la partie du pneumatique destinée à venir en contact avec le sol par l'intermédiaire d'une surface de roulement et s'étendant radialement depuis une surface de fond jusqu'à la surface de roulement, axialement depuis un premier bord jusqu'à un deuxième bord de bande de roulement définissant la largeur axiale de la bande de roulement, et circonférentiellement sur toute la périphérie du pneumatique. La bande de roulement, que le pneumatique soit destiné à équiper un véhicule de tourisme ou un véhicule poids lourd, est pourvue d'une sculpture comprenant notamment des éléments de sculpture ou blocs élémentaires délimités par diverses rainures principales, longitudinales ou circonférentielles, transversales ou encore obliques, les blocs élémentaires pouvant en outre comporter diverses incisions ou lamelles plus fines. Les rainures constituent des canaux destinés à évacuer l'eau lors d'un roulage sur sol mouillé.

Radialement à l'intérieur de la bande de roulement un pneumatique de type radial comprend une armature de renforcement, constituée d'une armature de sommet et d'une armature de carcasse radiale radialement intérieure à l'armature de sommet. L'armature de sommet comprend au moins une couche de sommet constituée par des éléments de renforcement ou renforts enrobés par un mélange caoutchouteux et parallèles entre eux. L'armature de carcasse radiale comprend au moins une couche de carcasse constituée par des renforts enrobés par un mélange caoutchouteux, parallèles entre eux et orientés sensiblement radialement, c'est-à-dire formant, avec la direction circonférentielle, un angle compris entre 85° et 95°.

Les compositions caoutchouteuses des bandes de roulement des pneumatiques sont spécialisées pour les performances de contact avec un sol de roulage, et ceci jusqu'à l'usure réglementaire des pneumatiques. La bande de roulement d'un pneumatique est responsable d'une grande partie de la résistance au roulement de ce pneumatique. Cette contribution est bien entendu très variable en fonction de la conception du pneumatique, mais un ordre de grandeur de l'ordre de 50 % peut être atteint.

Il est habituel d'adapter les matériaux les plus proches des nappes de l'armature de sommet du pneumatique, pour, entre autres, minimiser la résistance au roulement, par exemple avec l'introduction d'une sous-couche faiblement hystérétique. Il est à noter qu'une sous-couche ne vient pas au contact avec le sol de roulage pendant la durée réglementaire de vie du pneumatique.

Il est possible aussi de spécialiser davantage les matériaux de la bande de roulement. On peut avoir deux natures différentes de compositions caoutchouteuses dans la largeur de la bande de roulement. Le document EP 2594413 B1 présente une telle bande de roulement avec une partie centrale et deux parties latérales, telles que le mélange caoutchouteux des parties latérales présente un module dynamique d'extension et une hystérésis plus faibles que ceux de la partie centrale pour optimiser la résistance au roulement et le comportement routier du pneumatique.

Le compromis de performance entre la résistance au roulement et la résistance à l'usure des bandes de roulement a pu être amélioré grâce à l'introduction dans une composition de caoutchouc d'un copolymère d'éthylène et de 1,3-butadiène contenant plus de 50% en mole d'unité éthylène. On peut par exemple se référer à la demande de brevet WO 2014114607 A1. Mais une telle composition ne permet pas de conférer à la bande de roulement une performance d'adhérence optimale, notamment pour un véhicule de tourisme.

Il est connu que la performance d'adhérence d'un pneumatique peut être améliorée en augmentant la surface de contact de la bande de roulement sur le sol de roulage. Une solution consiste à utiliser une bande de roulement très déformable, notamment une composition de caoutchouc très déformable qui constitue la surface de la bande de roulement

destinée à entrer au contact de la surface de roulage. L'utilisation d'une composition de caoutchouc très molle, pourtant favorable pour l'adhérence, peut entraîner une dégradation du comportement routier du pneumatique.

Pour améliorer le comportement routier, on le sait, une rigidité supérieure de la bande de roulement est souhaitable, cette rigidification de la bande de roulement pouvant être obtenue par exemple en augmentant le taux de charge renforçante ou en incorporant certaines résines renforçantes dans les compositions de caoutchouc constitutives de ces bandes de roulement. Mais généralement, ces solutions ne sont pas toujours satisfaisantes, car elles peuvent s'accompagner d'une dégradation de la résistance au roulement.

Pour satisfaire à ces deux exigences contradictoires que sont le comportement routier et l'adhérence, une solution consiste aussi à créer un gradient de rigidité par un phénomène d'accommodation de la composition de caoutchouc de la bande de roulement comme cela est décrit dans les demandes de brevet WO 02/10269 et WO2012084599. Ce phénomène d'accommodation se traduit par l'aptitude de la composition de caoutchouc à devenir moins rigide en surface de la bande de roulement sous l'effet des déformations subies par la bande de roulement au cours du roulage du pneumatique. Cette diminution de la rigidité à la surface de la bande de roulement, ne se produit pas ou très peu à l'intérieur de la bande de roulement qui conserve ainsi un niveau de rigidité plus élevé que la surface de la bande de roulement.

Ces solutions techniques pour améliorer les performances d'adhérence, de comportement routier et de résistance au roulement ont été décrites généralement pour des élastomères diéniques fortement insaturés qui sont caractérisés par un taux molaire de diène très supérieur à 50%.

Il est décrit dans la demande de brevet JP 2013-185048 une composition de caoutchouc comprenant un copolymère d'éthylène et de 1,3-butadiène dont la processabilité est améliorée par l'introduction de 5 à 10 pce d'une résine plastifiante. Non seulement la teneur molaire en éthylène dans le copolymère est très inférieure à 50%, mais aussi la performance d'adhérence n'est pas traitée.

Pour l'utilisation de copolymères de diène conjugué contenant des taux molaires d'éthylène supérieurs à 50% dans des compositions de caoutchouc pour bande de roulement de pneumatique, il existe donc un intérêt et un besoin d'améliorer aussi la performance d'adhérence de la bande de roulement.

Poursuivant ses efforts, la Demanderesse a découvert que l'utilisation combinée d'un élastomère diénique fortement saturé et d'un système plastifiant spécifique dans une composition de caoutchouc pour bande de roulement d'un pneumatique permet d'améliorer la performance d'adhérence du pneumatique. Des modes de réalisation particuliers de l'invention contribuent même à améliorer le compromis de performance entre l'adhérence et la résistance au roulement. D'autres modes de réalisation particuliers de l'invention permettent d'améliorer aussi le compromis de performance entre l'adhérence et le comportement routier.

**Description brève de l'invention**

Un objet de l'invention est un pneumatique ayant un axe de rotation et un plan médian perpendiculaire à l'axe de rotation, et comprenant deux bourrelets, deux flancs reliés aux bourrelets, un sommet relié aux extrémités des deux flancs avec une armature de sommet, et une bande de roulement caoutchouteuse radialement extérieure, la bande de roulement étant séparée axialement en trois parties, une partie centrale et deux parties latérales. Ce pneumatique est caractérisé en ce que la composition caoutchouteuse des parties latérales comprend plus de 50 pce d'un copolymère d'éthylène et d'un 1,3-diène, une charge renforçante et un système plastifiant, le 1,3-diène étant le 1,3-butadiène ou l'isoprène et les unités éthylène dans le copolymère représentant plus de 50% en mole de l'ensemble des unités monomères du copolymère.

La composition caoutchouteuse particulière des deux parties latérales permet d'améliorer la résistance à l'usure du pneumatique et en particulier la forme d'usure aux épaules du pneumatique. Il permet aussi de diminuer la résistance au roulement du pneumatique en roulage.

Selon une première variante, la bande de roulement comprenant une pluralité d'éléments de sculpture avec des faces latérales et une face de contact destinée à venir en contact avec la chaussée pendant le roulage du pneumatique et une pluralité de rainures circonférentielles chacune délimitée par des faces latérales d'éléments de sculpture adjacents, en vis-à-vis l'une par rapport à l'autre, et délimitée par un fond, la partie centrale s'étend axialement de part et d'autre du plan médian du pneumatique au-delà de la pluralité de rainures circonférentielles, et dans lequel ladite partie centrale inclut les fonds desdites rainures circonférentielles.

Selon une deuxième variante, la bande de roulement comprenant une pluralité d'éléments de sculpture avec des faces latérales et une face de contact destinée à venir en contact avec la chaussée pendant le roulage du pneumatique et une pluralité de rainures circonférentielles chacune délimitée par des faces latérales d'éléments de sculpture adjacents, en vis-à-vis l'une par rapport à l'autre, et délimitée par un fond, la partie centrale s'étend axialement jusqu'à la rainure circonférentielle axialement la plus extérieure, au moins d'un côté du plan médian du pneumatique et de préférence de part et d'autre du plan médian du pneumatique.

Selon un mode de réalisation avantageux, la bande de roulement comportant une première couche C1 radialement intérieure et une deuxième couche C2 radialement extérieure, les parties latérales de la première couche C1 constituent les parties latérales et la deuxième couche C2 constitue la partie centrale de la bande de roulement.

La composition de caoutchouc des parties latérales de la bande de roulement peut comprendre un deuxième élastomère, de préférence diénique, c'est-à-dire comprenant des unités monomères diéniques. Le taux du deuxième élastomère est de préférence inférieur à 30 pce et très préférentiellement inférieur à 10 pce.

Le deuxième élastomère peut être un élastomère diénique fortement insaturé choisi dans le groupe constitué par les polybutadiènes, les polyisoprènes, les copolymères de butadiène, les copolymères d'isoprène et les mélanges de ces élastomères.

Avantageusement, le copolymère d'éthylène et d'un 1,3-diène est le seul élastomère de la composition de caoutchouc des parties latérales de la bande de roulement.

Selon une variante de réalisation du pneumatique selon l'invention, la composition caoutchouteuse de la partie centrale de la bande de roulement comprend moins de 50 pce d'un copolymère d'éthylène et d'un 1,3-diène, une charge renforçante et un système plastifiant, le 1,3-diène étant le 1,3-butadiène ou l'isoprène et les unités éthylène dans le copolymère représentant plus de 50% en mole de l'ensemble des unités monomères du copolymère.

Préférentiellement, le rapport K entre le module de cisaillement dynamique de la composition caoutchouteuse des parties latérales de la bande de roulement et le module de cisaillement dynamique de la composition caoutchouteuse de la partie centrale de la bande de roulement est supérieur à 1,1 et de préférence supérieur à 1,2, les modules de cisaillement dynamiques étant mesurés à 60°C lors d'un balayage en température à une contrainte imposée de 0,7 MPa et à une fréquence de 10 Hz.

Ce rapport de modules entre les parties latérales et la partie centrale de la bande de roulement permet aux parties latérales de rigidifier la bande de roulement et le sommet du pneumatique. Cela améliore le comportement routier du pneumatique.

Préférentiellement, on a K inférieur à 2,5 et très préférentiellement inférieur ou égal à 1,5.

Le module de cisaillement dynamique des parties latérales est de préférence compris entre 1 et 2,5 MPa.

Au-delà d'un tel rapport ou d'une telle valeur de module dynamique, la performance d'adhérence du pneumatique peut être diminuée.

**Description des Figures**

Les caractéristiques de l'invention seront mieux comprises à l'aide des dessins annexé dans lesquels :

- la figure 1 représente de manière très schématique (sans respect d'une échelle spécifique), une coupe radiale du sommet d'un pneumatique conforme à un mode de réalisation de l'invention ;
- la figure 2 représente une variante de réalisation du sommet de pneumatique de la figure 1 ;
- la figure 3 représente un autre mode de réalisation d'un sommet de pneumatique selon l'invention.

**Description détaillée de l'invention**

La figure 1 représente de manière schématique une coupe radiale du sommet 2 d'un bandage pneumatique ou pneumatique 1 selon un mode de réalisation de l'invention.

La figure 1 indique aussi les directions axiale X, circonférentielle C et radiale Z ainsi que le plan médian EP (plan perpendiculaire à l'axe de rotation du pneumatique qui est situé à mi-distance des deux bourrelets et passe par le milieu de l'armature de sommet du pneumatique).

Ce pneumatique 1 comporte un sommet 2 renforcé par une armature de sommet ou ceinture 3, deux flancs (non représentés) et deux bourrelets (non représentés), chacun de ces bourrelets étant renforcé avec une tringle (non représentée). L'armature de sommet 3 est surmontée radialement extérieurement d'une bande de roulement caoutchouteuse 7. Une armature de carcasse 4 est disposée radialement intérieurement à l'armature de sommet 3 est ancrée dans chaque bourrelet et s'étend d'un bourrelet à l'autre. L'armature de carcasse 4 est de manière connue en soi constituée d'au moins une nappe renforcée par des câbles dits « radiaux », par exemple textiles ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian EP. Une couche étanche 5 s'étend d'un bourrelet à l'autre radialement intérieurement relativement à l'armature de carcasse 4.

La coupe de la figure 1 de la bande de roulement 6 illustre cinq éléments de sculptures, trois dans la partie centrale du sommet, les éléments de sculpture centre 7 et deux axialement latéralement, aux épaules du sommet, les éléments de sculpture épaules 8. Chaque rainure comporte deux faces latérales 9 en vis-à-vis des éléments de sculptures adjacents ainsi qu'un fond de rainure 12. Dans l'exemple de la figure 1, la partie centrale 15 de la bande de roulement s'étend axialement de part et d'autre du plan médian EP au-delà des rainures circonférentielles 11. Les deux parties latérales 16 de la bande de roulement 6 constituent donc les parties axialement extérieures des deux éléments de

sculpture épaules 8.

En prenant comme référence le point A qui correspond à l'extrémité axiale de l'armature de sommet, la largeur axiale de l'élément de sculpture épaule 8 est Lep. La largeur axiale, au niveau de la face de contact 10 de l'élément de sculpture épaule 8 à l'état neuf est d. De préférence, le rapport d/Lep est supérieur à 1/3. Dans l'exemple présenté à gauche de la figure 1, élément de sculpture épaule 8a, ce rapport augmente avec l'usure de la bande de roulement. Dans la variante illustrée à droite de la figure 1, élément de sculpture épaule 8b, le flanc de séparation entre la partie centrale et la partie latérale est tel qu'il se rapproche du plan médian lorsqu'il s'écarte radialement de l'axe de rotation. Cette variante permet de conserver une raideur de cisaillement de l'élément de sculpture épaule 8b sensiblement constante lors de l'usure de la bande de roulement.

Selon une deuxième variante, illustrée à la figure 2, la partie centrale de la bande de roulement s'étend axialement jusqu'aux rainures circonférentielles 11 axialement les plus extérieures, de part et d'autre du plan médian EP du pneumatique. Dans cette variante, c'est l'ensemble des éléments de sculpture épaules 8 qui constitue les parties latérales de la bande de roulement. Il est avantageux que le fond des rainures fasse partie de la partie centrale de la bande de roulement car la composition caoutchouteuse de la partie centrale a une raideur dynamique inférieure à celle des parties latérales et le moulage des fonds des rainures est plus robuste. C'est ce qui est illustré à la figure 2.

Selon le mode de réalisation illustré à la figure 3, la bande de roulement comporte une première couche C1 radialement intérieure et une deuxième couche C2 radialement extérieure. La première couche C1 est continue de l'élément de sculpture 8a à l'élément de sculpture 8b sur toute la largeur axiale de la bande de roulement. Dans cet exemple, les parties latérales de la première couche C1 constituent les parties latérales 16 et la deuxième couche C2 constitue la partie centrale 15 de la bande de roulement.

Les figures 1 à 3 illustrent bien le rôle de rigidification de la bande de roulement et du sommet du pneumatique lorsque le rapport de module dynamique entre les deux mélanges caoutchouteux des parties latérales et de la partie centrale est supérieur à 1,1 et préférentiellement supérieur à 1,2. Il est préférable de ne pas dépasser un rapport de 2,5, et très préférentiellement 1,5, pour ne pas dégrader l'adhérence du pneumatique lorsque la surface de roulement est due pour une large part aux parties latérales.

Dans ce qui suit, tout intervalle de valeurs désigné par l'expression « entre a et b » représente le domaine de valeurs supérieur à « a » et inférieur à « b » (c'est-à-dire bornes a et b exclues) tandis que tout intervalle de valeurs désigné par l'expression « de a à b » signifie le domaine de valeurs allant de « a » jusqu'à « b » (c'est-à-dire incluant les bornes strictes a et b). L'abréviation « pce » signifie parties en poids pour cent parties en poids d'élastomère (du total des élastomères si plusieurs élastomères sont présents).

Dans la présente demande, on entend par « l'ensemble des unités monomères de l'élastomère » ou « la totalité des unités monomères de l'élastomère » tous les motifs de répétitions constitutifs de l'élastomère qui résultent de l'insertion des monomères dans la chaîne élastomère par polymérisation. Sauf indication contraire, les teneurs en une unité monomère ou motif de répétition dans l'élastomère diénique fortement saturé sont données en pourcentage molaire calculé sur la base des unités monomères du copolymère, c'est-à-dire de l'ensemble des unités monomères de l'élastomère.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les élastomères, les plastifiants, les charges...

Le copolymère d'éthylène et de 1,3-diène utile aux besoins de l'invention, est un élastomère de préférence statistique, qui comprend des unités éthylène résultant de la polymérisation d'éthylène. De manière connue, l'expression « unité éthylène » fait référence au motif -(CH2-CH2)- résultant de l'insertion de l'éthylène dans la chaîne élastomère. Dans le copolymère d'éthylène et de 1,3-diène, les unités éthylène représentent plus de 50% en mole des unités monomères du copolymère. De préférence, les unités éthylène dans le copolymère représentent plus de 60%, avantageusement plus de 70% en mole des unités monomères du copolymère. Selon l'un quelconque des modes de réalisation de l'invention, y compris leur variantes préférentielles, l'élastomère diénique fortement saturé comprend préférentiellement au plus 90 % en mole d'unité éthylène.

Le copolymère utile aux besoins de l'invention, également désigné ci-après sous l'appellation « d'élastomère diénique fortement saturé », comprend aussi des unités 1,3-diène résultant de la polymérisation d'un 1,3-diène, le 1,3-diène étant le 1,3-butadiène ou l'isoprène. De manière connue, l'expression « unité 1,3-diène » fait référence aux unités résultant de l'insertion du 1,3-diène par une addition 1,4, une addition 1,2 ou une addition 3,4 dans le cas de l'isoprène. De préférence, le 1,3-diène est le 1,3-butadiène.

Selon un premier mode de réalisation de l'invention, le copolymère d'éthylène et d'un 1,3-diène contient des unités de formule (I). La présence de motif cyclique saturé à 6 membres, 1,2-cyclohexanediyle, de formule (I) comme unité monomère dans le copolymère peut résulter d'une série d'insertions très particulières de l'éthylène et du 1,3-butadiène dans la chaîne polymère au cours de sa croissance.

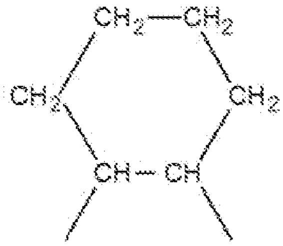

(I)

Selon un deuxième mode de réalisation préférentiel de l'invention, le copolymère d'éthylène et d'un 1,3-diène contient des unités de formule (II-1) ou (II-2).

$-CH_2-\underline{CH}(CH=CH_2)-$ (II-1)

$-CH_2-\underline{CH}(CMe=CH_2)$ (II-2)

Selon un troisième mode de réalisation préférentiel de l'invention, le copolymère d'éthylène et d'un 1,3-diène contient des unités de formule (I) et de formule (II-1).

Selon un quatrième mode de réalisation de l'invention, l'élastomère diénique fortement saturé est dépourvu d'unités de formule (I). Selon ce quatrième mode de réalisation, le copolymère d'éthylène et d'un 1,3-diène contient de préférence des unités de formule (II-1) ou (II-2).

De préférence, l'élastomère diénique fortement saturé contient des unités résultant de l'insertion du 1,3-diène par une addition 1,4, c'est-à-dire des unités de formule -CH2-CH=CH-CH2- lorsque le 1,3-diène est le 1,3-butadiène ou de formule -CH2-CMe=C-CH2-lorsque le 1,3-diène est l'isoprène.

Lorsque l'élastomère diénique fortement saturé comprend des unités de formule (I) ou des unités de formule (II-1) ou encore comprend des unités de formule (I) et des unités de formule (II-1), les pourcentages molaires des unités de formule (I) et des unités de formule (II-1) dans l'élastomère diénique fortement saturé, respectivement o et p, satisfont de préférence à l'équation suivante (éq. 1), de manière plus préférentielle à l'équation (éq. 2), o et p étant calculés sur la base de l'ensemble des unités monomères de l'élastomère diénique fortement saturé.

$$0 < o+p \leq 25 \qquad \text{(éq. 1)}$$

$$0 < o+p < 20 \qquad \text{(éq. 2)}$$

Selon le premier mode de réalisation, selon le deuxième mode de réalisation de l'invention, selon le troisième mode de réalisation et selon le quatrième mode de réalisation, y compris leurs variantes préférentielles, l'élastomère diénique fortement saturé est préférentiellement un copolymère statistique.

L'élastomère diénique fortement saturé, en particulier selon le premier mode de réalisation, selon le deuxième mode de réalisation, selon le troisième mode de réalisation et selon le quatrième mode de réalisation, peut être obtenu selon différentes méthodes de synthèses connues de l'homme du métier, notamment en fonction de la microstructure visée de l'élastomère diénique fortement saturé. Généralement, il peut être préparé par copolymérisation au moins d'un 1,3-diène, de préférence le 1,3-butadiène, et d'éthylène et selon des méthodes de synthèse connues, en particulier en présence d'un système catalytique comprenant un complexe métallocène. On peut citer à ce titre les systèmes catalytiques à base de complexes métallocènes, lesquels systèmes catalytiques sont décrits dans les documents EP 1 092 731, WO 2004035639, WO 2007054223 et WO 2007054224 au nom de la Demanderesse. L'élastomère diénique fortement saturé, y compris lorsqu'il est statistique, peut être préparé aussi par un procédé utilisant un système catalytique de type préformé comme ceux décrits dans les documents WO 2017093654 A1, WO 2018020122 A1 et WO 2018020123 A1.

L'élastomère diénique fortement saturé peut être constitué d'un mélange de copolymères d'éthylène et de 1,3-diène qui se différencient les uns des autres par leurs microstructures ou par leurs macrostructures.

Selon le premier mode de réalisation de l'invention, selon le deuxième mode de réalisation de l'invention, selon le troisième mode de réalisation et selon le quatrième mode de réalisation, l'élastomère diénique fortement saturé est de préférence un copolymère d'éthylène et de 1,3-butadiène, de manière plus préférentielle un copolymère d'éthylène et de 1,3-butadiène statistique.

Selon un mode de réalisation particulier de l'invention, le copolymère d'éthylène et d'un 1,3-diène porte en extrémité de chaîne un groupe fonctionnel F1 qui est une fonction silanol ou alcoxysilane. Ce mode de réalisation est

aussi favorable à l'amélioration de la résistance au roulement.

Selon ce mode de réalisation, la fonction silanol ou alcoxysilane est située en extrémité de la chaîne de l'élastomère diénique fortement saturé. Dans la présente demande, la fonction alcoxysilane ou silanol portée en une des extrémités est désignée dans la présente demande par l'appellation le groupe fonctionnel F1. De préférence, elle est attachée directement par une liaison covalente à l'unité terminale de l'élastomère diénique fortement saturé, ce qui revient à dire que l'atome de silicium de la fonction est lié directement de façon covalente à un atome de carbone de l'unité terminale de l'élastomère diénique fortement saturé. L'unité terminale à laquelle est directement attaché le groupe fonctionnel F1 est de préférence constituée d'un méthylène lié à une unité éthylène ou à une unité 1,2-cyclohexanediyle, de formule (I), l'atome Si étant lié au méthylène. Par unité terminale, on entend la dernière unité insérée dans la chaîne copolymère par copolymérisation, unité qui est précédée de l'unité pénultième, elle-même précédée de l'unité antépénultième.

Selon une première variante de ce mode, le groupe fonctionnel F1 est de formule (III-a)

$$Si(OR^1)_{3-f}(R^2)_f \qquad \text{(III-a)}$$

- les symboles R1, identiques ou différents, représentant un alkyle,
- les symboles R2, identiques ou différents, représentant un atome d'hydrogène, une chaîne hydrocarbonée ou une chaîne hydrocarbonée substituée par une fonction chimique F2,
- f étant un nombre entier allant de 0 à 2.

Dans la formule (III-a), les symboles R1 sont préférentiellement un alkyle ayant au plus 6 atomes de carbone, plus préférentiellement un méthyle ou un éthyle, encore plus préférentiellement un méthyle.

Si 3-f est supérieur à 1, les symboles R1 sont avantageusement identiques, en particulier méthyle ou éthyle, plus particulièrement méthyle.

Selon une deuxième variante de ce mode, le groupe fonctionnel F1 est de formule (III-b)

$$Si(OH)(R^2)_2, \qquad \text{(III-b)}$$

- les symboles R2, identiques ou différents, représentant un atome d'hydrogène, une chaîne hydrocarbonée ou une chaîne hydrocarbonée substituée par une fonction chimique F2.

Parmi les chaînes hydrocarbonées représentée par les symboles R2 dans les formules (III-a) et (III-b), on peut citer les alkyles, notamment ceux ayant 1 à 6 atomes de carbone, préférentiellement méthyle ou éthyle, plus préférentiellement méthyle.

Parmi les chaînes hydrocarbonées substituées par une fonction chimique F2 représentée par les symboles R2 dans les formules (III-a) et (III-b), on peut citer les chaînes alcanediyles, notamment celles comportant au plus 6 atomes de carbone, tout particulièrement le groupe 1,3-propanediyle, le groupe alcanediyle portant un substituant, la fonction chimique F2, autrement dit, une valence de la chaîne alcanediyle pour la fonction F2, l'autre valence pour l'atome de silicium de la fonction silanol ou alcoxysilane.

Dans les formules (III-a) et (III-b), on entend par fonction chimique F2 un groupe qui est différent d'un groupe hydrocarboné saturé et qui peut participer à des réactions chimiques. Parmi les fonctions chimiques qui peuvent convenir, on peut citer la fonction éther, la fonction thioéther, la fonction amine primaire, secondaire ou tertiaire, la fonction thiol, la fonction silyle. Les fonctions amine primaire ou secondaire ou thiol peuvent être protégées ou ne pas être protégées. Le groupe protecteur des fonctions amine et thiol est par exemple un groupe silyle, en particulier triméthylsilyle ou terbutyldiméthylsilyle. De préférence, la fonction chimique F2 est une fonction amine primaire, secondaire, tertiaire ou une fonction thiol, la fonction amine primaire, secondaire ou thiol étant protégée ou non par un groupe protecteur.

De préférence, les symboles R2, identiques ou différents, représentent un alkyle ayant au plus 6 atomes de carbone ou une chaîne alcanediyle ayant au plus 6 atomes de carbone et substituée par une fonction chimique F2 dans les formules (III-a) et (III-b).

A titre de groupe fonctionnel F1, on peut citer les groupes diméthoxyméthylsilyle, diméthoxyéthylsilyle, diéthoxyméthysilyle, diéthoxyéthysilyle, 3-(N,N-diméthylamino)propyl-diméthoxysilyle, 3-(N,N-diméthylamino)propyldiéthoxysilyle, 3-aminopropyldiméthoxysilyle, 3-aminopropyldiéthoxysilyle, 3-thiopropyldiméthoxysilyle, 3-thiopropyldiéthoxysilyle, méthoxydiméthylsilyle, méthoxydiéthylsilyle, éthoxydiméthysilyle, éthoxydiéthysilyle, 3-(N,N-diméthylamino)propylméthoxyméthylsilyle, 3-(N,N-diméthylamino)propylméthoxy-éthylsilyle, 3-(N,N-diméthylamino)propyléthoxyméthylsilyle, 3-(N,N-diméthylamino)propyl-éthoxyéthylsilyle, 3-aminopropylméthoxyméthylsilyle, 3-aminopropylméthoxyéthylsilyle, 3-aminopropyléthoxyméthylsilyle, 3-aminopropyléthoxyéthylsilyle, 3-thiopropylméthoxy-méthylsilyle, 3-thiopropyléthoxyméthylsilyle, 3-thiopropylméthoxyéthylsilyle, 3-thiopropyl-éthoxyéthylsilyle.

A titre de groupe fonctionnel F1, on peut aussi citer la forme silanol des groupes fonctionnels précédemment cités qui contiennent une et une seule (en anglais « one ») fonction éthoxy ou méthoxy, la forme silanol pouvant être obtenue par hydrolyse de la fonction éthoxy ou méthoxy. A ce titre conviennent les groupes diméthylsilanol, diéthylsilanol, 3-(N,N-diméthylamino)propylméthylsilanol, 3-(N,N-diméthylamino)propyl-éthylsilanol, 3-aminopropylméthylsilanol, 3-aminopropyléthylsilanol, 3-thiopropyléthyl-silanol, 3-thiopropylméthylsilanol.

A titre de groupe fonctionnel F1, on peut également citer les groupes fonctionnels qu'ils soient sous la forme alcoxy ou silanol, qui ont été précédemment cités et qui comportent une fonction amine ou thiol sous une forme protégée par un groupe silyle, en particulier triméthylsilyle ou terbutyldiméthylsilyle.

De préférence, le groupe fonctionnel F1 est de formule (III-a) dans laquelle f est égal à 1. Pour cette variante préférentielle, conviennent tout particulièrement les groupes pour lesquels R1 est un méthyle ou un éthyle, comme par exemple les groupes diméthoxyméthylsilyle, diméthoxyéthylsilyle, diéthoxyméthysilyle, diéthoxyéthysilyle, 3-(N,N-diméthylamino)propyldiméthoxysilyle, 3-(N,N-diméthylamino)propyldiéthoxysilyle, 3-aminopropyldiméthoxysilyle, 3-aminopropyl-diéthoxysilyle, 3-thiopropyldiméthoxysilyle, 3-thiopropyldiéthoxysilyle. Conviennent aussi les formes protégées de la fonction amine ou thiol des 4 derniers groupes fonctionnels cités dans la liste précédente par un groupe silyle, en particulier triméthylsilyle ou terbutyldiméthylsilyle.

De manière plus préférentielle, le groupe fonctionnel F1 est de formule (III-a) dans laquelle f vaut 1 et R1 est un méthyle. Pour cette variante plus préférentielle, conviennent tout particulièrement les groupes diméthoxyméthylsilyle, diméthoxyéthylsilyle, 3-(N,N-diméthylamino)propyldiméthoxysilyle, 3-aminopropyldiméthoxysilyle, 3-thiopropyldiméthoxysilyle, ainsi que les formes protégées de la fonction amine ou thiol du 3-aminopropyldiméthoxysilyle ou 3-thiopropyldiméthoxysilyle par un triméthylsilyle ou un terbutyldiméthylsilyle.

Le copolymère d'éthylène et d'un 1,3-diène qui porte en extrémité de chaîne un groupe fonctionnel F1 , fonction silanol ou alcoxysilane, peut être préparé par le procédé décrit dans la demande de brevet déposée sous le numéro PCT/FR2018/051305 ou dans la demande de brevet déposée sous le numéro PCT/FR2018/051306, lequel procédé comprend les étapes (a) et (b), et le cas échéant l'étape (c) suivantes :

(a) la copolymérisation d'un mélange monomère en présence d'un système catalytique comprenant un organomagnésien et un métallocène ;
(b) la réaction d'un agent de fonctionnalisation avec le polymère obtenu à l'étape (a) ;
(c) le cas échéant une réaction d'hydrolyse.

L'étape (a) est commune à l'étape de copolymérisation mise en oeuvre pour préparer les copolymères homologues non fonctionnels décrits précédemment à la différence près que la réaction de copolymérisation est suivie d'une réaction de fonctionnalisation du copolymère, l'étape (b).

L'étape (b) consiste à faire réagir un agent de fonctionnalisation avec le copolymère obtenu à l'étape (a) pour fonctionnaliser en extrémité de chaîne le copolymère. L'agent de fonctionnalisation est un composé de formule (IV),

$$Si(Fc^1)_{4-g}(Rc^2)_g \qquad (IV)$$

- les symboles Fc1, identiques ou différents, représentant un groupe alcoxy ou un atome d'halogène ;
- les symboles Rc2, identiques ou différents, représentant un atome d'hydrogène, une chaîne hydrocarbonée ou une chaîne hydrocarbonée substituée par une fonction chimique Fc2 ;
- g étant un nombre entier allant de 0 à 2.

Lorsque le symbole Fc1 représente un groupe alcoxy, le groupe alcoxy est de préférence méthoxy ou éthoxy. Lorsque le symbole Fc1 représente un atome d'halogène, l'atome d'halogène est de préférence le chlore.

Lorsque le symbole Fc1 représente un groupe alcoxy, le groupe alcoxy est de préférence méthoxy ou éthoxy. Lorsque le symbole Fc1 représente un atome d'halogène, l'atome d'halogène est de préférence le chlore.

L'agent de fonctionnalisation peut être de formule (IV-1), de formule (IV-2), de formule (IV-3) ou de formule (IV-4),

$$\underline{MeOSi}(Fc^1)_{3-g}(Rc^2)_g \qquad (IV-1)$$

$$(MeO)_2\underline{Si}(Fc1)_{2-g}(Rc^2)_g \qquad (IV-2)$$

$$(MeO)_3\underline{Si}(Fc^1)_{1-g}(Rc^2)_g \qquad (IV-3)$$

$$(MeO)_3SiRc^2 \qquad (IV-4),$$

- dans lesquelles les symboles Fc1 et Rc2 étant tels que définis dans la formule (IV) ;
- pour la formule (IV-1) et (IV-2), g étant un nombre entier allant de 0 à 2 ;
- pour la formule (IV-3), g étant un nombre entier allant de 0 à 1.

Parmi les chaînes hydrocarbonées représentée par les symboles Rc2 dans les formules (III), (IV-1), (IV-2), (IV-3) et (IV-4), on peut citer les alkyles, de préférence les alkyles ayant au plus 6 atomes de carbone, de manière plus préférentielle méthyle ou éthyle, mieux méthyle.

Parmi les chaînes hydrocarbonées substituées par une fonction chimique Fc2 qui sont représentée par les symboles Rc2 dans les formules (IV), (IV-1), (IV-2), (IV-3) et (IV-4), on peut citer les chaînes alcanediyles, de préférence celles comportant au plus 6 atomes de carbone, de manière plus préférentielle le groupe 1,3-propanediyle, le groupe alcanediyle portant un substituant, la fonction chimique Fc2, autrement dit une valence de la chaîne alcanediyle pour la fonction F2, l'autre valence pour l'atome de silicium de la fonction silanol ou alcoxysilane.

Dans les formules (IV), (IV-1), (IV-2), (IV-3) et (IV-4), on entend par fonction chimique un groupe qui est différent d'un groupe hydrocarboné saturé et qui peut participer à des réactions chimiques. L'homme du métier comprend que la fonction chimique Fc2 est un groupe chimiquement inerte vis-à-vis des espèces chimiques présentes dans le milieu de polymérisation. La fonction chimique Fc2 peut être sous une forme protégée, comme par exemple dans le cas de la fonction amine primaire, amine secondaire ou thiol. A titre de fonction chimique Fc2, peuvent être citées les fonctions éther, thioéther, amine primaire protégée, amine secondaire protégée, amine tertiaire, thiol protégé, silyle. De préférence, la fonction chimique Fc2 est une fonction amine primaire protégée, une fonction amine secondaire protégée, une fonction amine tertiaire ou une fonction thiol protégée. Comme groupes protecteurs des fonctions amine primaire, amine secondaire et thiol, on peut citer les groupes silyles, par exemple les groupes triméthylsilyle et terbutyldiméthylsilyle.

g est de préférence différent de 0, ce qui implique que l'agent de fonctionnalisation comprend au moins une liaison Si-Rc2.

A titre d'agent de fonctionnalisation, on peut citer les composés diméthoxydiméthylsilane, diéthoxydiméthylsilane, diméthoxydiéthylsilane, diéthoxydiéthylsilane, (N,N-diméthyl-3-aminopropyl)méthyldiméthoxysilane, (N,N-diméthyl-3-aminopropyl)méthyldiéthoxysilane, (N,N-diméthyl-3-aminopropyl)éthyldiméthoxysilane, (N,N-diméthyl-3-aminopropyl)éthyl-diéthoxysilane, 3-méthoxy-3,8,8,9,9-pentaméthyl-2-oxa-7-thia-3,8-disiladecane, triméthoxy-méthylsilane, triéthoxyméthylsilane, triméthoxyéthylsilane, triéthoxyéthylsilane, (N,N-diméthylaminopropyl)triméthoxysilane, le (N,N-diméthylaminopropyl)triéthoxysilane, (N-(3-triméthoxysilyl)propyl)-N-(triméthylsilyl)silanamine, (N-(3-triéthoxysilyl)propyl)-N-(triméthyl-silyl)silanamine et 3,3-diméthoxy-8,8,9,9-tétraméthyl-2-oxa-7-thia-3,8-disiladecane, de préférence diméthoxydiméthylsilane, diméthoxydiéthylsilane, (N,N-diméthyl-3-aminopropyl)méthyldiméthoxysilane, (N,N-diméthyl-3-aminopropyl)éthyldiméthoxysilane, 3-méthoxy-3,8,8,9,9-pentaméthyl-2-oxa-7-thia-3,8-disiladecanetriméthoxyméthylsilane, triméthoxyéthylsilane, (N,N-diméthylaminopropyl)triméthoxysilane, (N-(3-triméthoxysilyl)-propyl)-N-(triméthylsilyl)silanamine et 3,3-diméthoxy-8,8,9,9-tétraméthyl-2-oxa-7-thia-3,8-disiladecane, de manière plus préférentielle triméthoxyméthylsilane, triméthoxyéthylsilane, (N,N-diméthylaminopropyl)triméthoxysilane, (N-(3-triméthoxysilyl)propyl)-N-(triméthylsilyl)-silanamine et 3,3-diméthoxy-8,8,9,9-tétraméthyl-2-oxa-7-thia-3,8-disiladecane.

L'agent de fonctionnalisation est ajouté typiquement au milieu de polymérisation résultant de l'étape (a). Il est typiquement ajouté au milieu de polymérisation à un taux de conversion des monomères choisi par l'homme du métier selon la macrostructure souhaitée de l'élastomère. L'étape (a) étant conduite généralement sous pression d'éthylène, un dégazage du réacteur de polymérisation peut être réalisé avant l'ajout de l'agent de fonctionnalisation. L'agent de fonctionnalisation est ajouté dans des conditions inertes et anhydres au milieu de polymérisation, maintenu à la température de polymérisation. Il est typiquement utilisé de 0.25 à 10 moles d'agent de fonctionnalisation pour 1 mole de co-catalyseur, de préférence de 2 à 4 moles d'agent de fonctionnalisation pour 1 mole de co-catalyseur.

L'agent de fonctionnalisation est mis en contact avec le milieu de polymérisation pendant un temps suffisant pour permettre la réaction de fonctionnalisation. Ce temps de contact est choisi judicieusement par l'homme du métier en fonction de la concentration du milieu réactionnel et de la température du milieu réactionnel. Typiquement, la réaction de fonctionnalisation est conduite sous agitation, à une température allant de 17 à 80°C, pendant 0.01 à 24 heures.

Une fois fonctionnalisé, l'élastomère peut être récupéré, notamment en l'isolant du milieu réactionnel. Les techniques pour séparer l'élastomère du milieu réactionnel sont bien connues de l'homme du métier et choisies par l'homme du métier selon la quantité d'élastomère à séparer, sa macrostructure et les outils mis à dispositions de l'homme du métier. Peuvent être cités par exemple les techniques de coagulation de l'élastomère dans un solvant tel que le méthanol, les techniques d'évaporation du solvant du milieu réactionnel et des monomères résiduels, par exemple sous pression réduite.

Lorsque l'agent de fonctionnalisation est de formule (IV), (IV-1) ou (IV-2) et g est égal à 2, l'étape (b) peut être suivie d'une réaction d'hydrolyse pour former un élastomère portant en extrémité de chaîne une fonction silanol. L'hydrolyse peut être conduite par une étape de stripping de la solution contenant l'élastomère à l'issue de l'étape (b), de

manière connue par l'homme du métier.

Lorsque l'agent de fonctionnalisation est de formule (IV), (IV-1), (IV-2), (IV-3) ou (IV-4), que g est différent de 0 et que Rc2 représente une chaîne hydrocarbonée substituée par une fonction Fc2 sous une forme protégée, l'étape (b) peut être aussi suivie d'une réaction d'hydrolyse pour déprotéger la fonction en extrémité de la chaîne de l'élastomère. La réaction d'hydrolyse, étape de déprotection de la fonction, est généralement conduite en milieu acide ou basique selon la nature chimique de la fonction à déprotéger. Par exemple, un groupe silyle, en particulier triméthylsilyle ou terbutyldiméthylsilyle, qui protège une fonction amine ou thiol peut être hydrolysé en milieu acide ou basique de manière connue par l'homme du métier. Le choix des conditions de déprotection est fait judicieusement par l'homme du métier en tenant compte de la structure chimique du substrat à déprotéger.

L'étape (c) est une étape optionnelle selon que l'on souhaite transformer ou non le groupe fonctionnel en fonction silanol ou que l'on souhaite déprotéger ou non la fonction protégée. Préférentiellement, l'étape (c) est conduite avant de séparer l'élastomère du milieu réactionnel à l'issue de l'étape (b) ou bien simultanément à cette étape de séparation.

Qu'il porte une fonction, silanol ou alcoxysilane, ou non, le taux du copolymère d'éthylène et d'un 1,3-diène est supérieur à 50 pce, préférentiellement supérieur à 70 pce. Le complément à 100 pce peut être tout élastomère diénique, par exemple un homopolymère ou un copolymère de 1,3-butadiène ou encore un homopolymère ou un copolymère d'isoprène. Avantageusement, le taux du copolymère d'éthylène et d'un 1,3-diène est de 100 pce. Un taux élevé du copolymère dans la composition de caoutchouc est encore plus favorable pour le compromis de performance entre la résistance au roulement, la résistance à l'usure et l'adhérence.

La composition de caoutchouc des parties latérales a pour autre caractéristique essentielle de comprendre une charge renforçante et un système plastifiant. Le système plastifiant est de préférence hydrocarboné.

Avantageusement, la charge renforçante comprend une silice.

Une charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

Le taux de charge renforçante dans la composition de caoutchouc des parties latérales est avantageusement supérieur ou égal à 35 pce et inférieur ou égal à 100 pce, de préférence supérieur ou égal à 50 pce et inférieur ou égal à 100 pce. De préférence, la silice représente plus de 50 % en masse de la charge renforçante. De manière plus préférentielle, la silice représente plus de 85 % en masse de la charge renforçante.

La silice utilisée peut être toute silice renforçante connue de l'homme du métier, notamment toute silice précipitée ou pyrogénée présentant une surface spécifique BET ainsi qu'une surface spécifique CTAB toutes deux inférieures à 450 m2/g, de préférence comprises dans un domaine allant de 30 à 400 m2/g, notamment de 60 à 300 m2/g. Dans le présent exposé, la surface spécifique BET est déterminée par adsorption de gaz à l'aide de la méthode de Brunauer-Emmett-Teller décrite dans « The Journal of the American Chemical Society » (Vol. 60, page 309, février 1938), et plus précisément selon une méthode adaptée de la norme NF ISO 5794-1, annexe E de juin 2010 [méthode volumétrique multipoints (5 points) - gaz: azote - dégazage sous vide: une heure à 160°C - domaine de pression relative p/po : 0,05 à 0,17].

Les valeurs de surface spécifique CTAB ont été déterminées selon la norme NF ISO 5794-1, annexe G de juin 2010. Le procédé est basé sur l'adsorption du CTAB (bromure de N-hexadécyl-N,N,N-triméthylammonium) sur la surface « externe » de la charge renforçante.

On peut utiliser tout type de silice précipitée, notamment des silices précipitées hautement dispersibles (dites « HDS » pour « highly dispersible » ou « highly dispersible silica »). Ces silices précipitées, hautement dispersibles ou non, sont bien connues de l'homme du métier. On peut citer, par exemple, les silices décrites dans les demandes WO03/016215-A1 et WO03/016387-A1. Parmi les silices HDS commerciales, on peut notamment utiliser les silices « Ultrasil ® 5000GR », « Ultrasil ® 7000GR » de la société Evonik, les silices « Zeosil ® 1085GR», « Zeosil® 1115 MP », « Zeosil® 1165MP », « Zeosil® Premium 200MP », « Zeosil® HRS 1200 MP » de la Société Solvay. À titre de silice non HDS, les silices commerciales suivantes peuvent être utilisées : les silices « Ultrasil ® VN2GR », « Ultrasil ® VN3GR » de la société Evonik, la silice « Zeosil® 175GR » » de la société Solvay, les silices « Hi-Sil EZ120G(-D) », « Hi-Sil EZ160G(-D) », « Hi-Sil EZ200G(-D) », « Hi-Sil 243LD », « Hi-Sil 210 », « Hi-Sil HDP 320G » de la société PPG.

La charge renforçante peut comprendre tout type de charge dite renforçante autre que la silice, connue pour ses capacités à renforcer une composition de caoutchouc utilisable notamment pour la fabrication de pneumatiques, par exemple un noir de carbone. Comme noirs de carbone conviennent tous les noirs de carbone, notamment les noirs conventionnellement utilisés dans les pneumatiques ou leurs bandes de roulement. Parmi ces derniers, on citera plus particulièrement les noirs de carbone renforçants des séries 100, 200, 300, ou les noirs de série 500, 600 ou 700 (grades ASTM D-1765-2017), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés.

De préférence, le noir de carbone est utilisé à un taux inférieur ou égal à 20 pce, plus préférentiellement inférieur

ou égal à 10 pce (par exemple le taux de noir de carbone peut être compris dans un domaine allant de 0,5 à 20 pce, notamment allant de 1 à 10 pce). Avantageusement, le taux de noir de carbone dans la composition de caoutchouc est inférieur ou égal à 5 pce. Dans les intervalles indiqués, on bénéficie des propriétés colorantes (agent de pigmentation noire) et anti-UV des noirs de carbone, sans pénaliser par ailleurs les performances typiques apportées par la silice.

Pour coupler la charge inorganique renforçante, en l'espèce la silice, à l'élastomère, on peut utiliser de manière bien connue un agent de couplage (ou agent de liaison) au moins bifonctionnel destiné à assurer une connexion suffisante, de nature chimique et/ou physique, entre la charge inorganique (surface de ses particules) et l'élastomère, auquel cas la composition de caoutchouc des parties latérales comprend un agent de couplage pour lier la silice à l'élastomère. On utilise en particulier des organosilanes ou des polyorganosiloxanes au moins bifonctionnels. Par « bifonctionnel », on entend un composé possédant un premier groupe fonctionnel capable d'interagir avec la charge inorganique et un second groupe fonctionnel capable d'interagir avec l'élastomère.

On utilise notamment des silanes polysulfurés, dits « symétriques » ou « asymétriques » selon leur structure particulière, tels que décrits par exemple dans les demandes WO03/002648-A1 (ou US2005/016651-A1) et WO03/002649-A1 (ou US2005/016650-A1). Conviennent en particulier, sans que la définition ci-après soit limitative, des silanes polysulfurés répondant à la formule générale (V) suivante:

$$Z - A - S_x - A - Z \qquad (V),$$

dans laquelle:

- x est un entier de 2 à 8 (de préférence de 2 à 5) ;
- les symboles A, identiques ou différents, représentent un radical hydrocarboné divalent (de préférence un groupement alkylène en C1-C18 ou un groupement arylène en C6-C12, plus particulièrement un alkylène en C1-C10, notamment en un alkylène en C1-C4, en particulier le propylène) ;
- les symboles Z, identiques ou différents, répondent à l'une des trois formules ci-après :

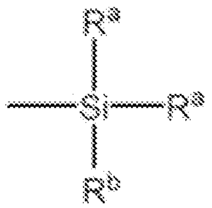
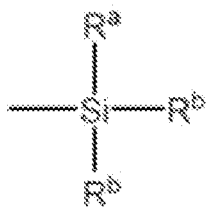
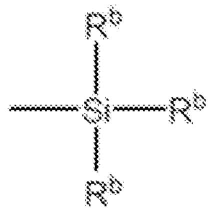

dans lesquelles:

- les radicaux Ra, substitués ou non substitués, identiques ou différents entre eux, représentent un groupe alkyle en C1-C18, un groupe cycloalkyle en C5-C18 ou un groupe aryle en C6-C18 (de préférence des groupes alkyle en C1-C6, le cyclohexyle ou le phényle, notamment des groupes alkyle en C1-C4, plus particulièrement le méthyle et/ou l'éthyle) ;
- les radicaux Rb, substitués ou non substitués, identiques ou différents entre eux, représentent un groupe alkoxyle en C1-C18 ou un groupe cycloalkoxyle en C5-C18 (de préférence un groupe choisi parmi les alkoxyles en C1-C8 et les cycloalkoxyles en C5-C8, plus préférentiellement encore un groupe choisi parmi les alkoxyles en C1-C4, en particulier le méthoxyle et l'éthoxyle), ou un groupe hydroxyle, ou tel que 2 radicaux Rb représentent un groupe dialkoxyle en C3-C18.

Dans le cas d'un mélange d'alkoxysilanes polysulfurés répondant à la formule (V) ci-dessus, notamment des mélanges usuels disponibles commercialement, la valeur moyenne des « x » est un nombre fractionnaire de préférence compris dans un domaine allant de 2 à 5, plus préférentiellement proche de 4.

A titre d'exemples de silanes polysulfurés, on citera plus particulièrement les polysulfures (notamment disulfures, trisulfures ou tétrasulfures) de bis-(alkoxyl(C1-C4)-alkyl(C1-C4)silyl-alkyl(C1-C4)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C2H5O)3Si(CH2)3S2]2 commercialisé sous la dénomination « Si69 » par la société Evonik ou le disulfure de bis-(triéthoxysilylpropyle), en abrégé TESPD, de formule [(C2H5O)3Si(CH2)3S]2 commercialisé sous la dénomination « Si75 » par la société Evonik. On citera également à titre d'exemples préférentiels les polysulfures (notamment disulfures, trisulfures ou tétrasulfures) de bis-(monoalkoxyl(C1-C4)-dialkyl(C1-C4)silylpropyle), plus particulièrement le tétrasulfure de bis-monoéthoxydiméthylsilylpropyle tel que décrit dans la demande de brevet WO02/083782-A1 précitée (ou US7217751-B2).

Bien entendu pourraient être également utilisés des mélanges des agents de couplage précédemment décrits.

La teneur en agent de couplage dans la composition caoutchouteuse des parties latérales est avantageusement inférieure ou égale à 25 pce, étant entendu qu'il est en général souhaitable d'en utiliser le moins possible. Typiquement le taux d'agent de couplage représente de 0,5 % à 15 % en poids par rapport à la quantité de charge inorganique renforçante. Son taux est préférentiellement compris dans un domaine allant de 0,5 à 20 pce, plus préférentiellement compris dans un domaine allant de 3 à 15 pce. Ce taux est aisément ajusté par l'homme du métier selon le taux de charge inorganique renforçante utilisé dans la composition des parties latérales de la bande de roulement du pneumatique de l'invention.

Une autre caractéristique essentielle de la composition caoutchouteuse des parties latérales est de comporter un système plastifiant. Ce système plastifiant comprend avantageusement une résine plastifiante hydrocarbonée et un agent plastifiant liquide hydrocarboné, étant entendu que le taux total de résine plastifiante hydrocarbonée et d'agent plastifiant liquide hydrocarboné est supérieur à 10 pce et inférieur ou égal à 80 pce, de préférence supérieur ou égal à 30 pce et inférieur ou égal à 80 pce.

Les résines hydrocarbonées, appelées aussi résines plastifiantes hydrocarbonées, sont des polymères bien connus de l'homme du métier, essentiellement à base de carbone et hydrogène mais pouvant comporter d'autres types d'atomes, par exemple l'oxygène, utilisables en particulier comme agents plastifiants ou agents tackifiants dans des matrices polymériques. Elles sont par nature au moins partiellement miscibles (i.e., compatibles) aux taux utilisés avec les compositions de polymères auxquelles elles sont destinées, de manière à agir comme de véritables agents diluants. Elles ont été décrites par exemple dans l'ouvrage intitulé "Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. "Rubber Tires and Mechanical Goods"). De manière connue, ces résines hydrocarbonées peuvent être qualifiées aussi de résines thermoplastiques en ce sens qu'elles se ramollissent par chauffage et peuvent ainsi être moulées. Le point de ramollissement des résines hydrocarbonées est mesuré selon la norme ISO 4625 (méthode "Ring and Ball"). La Tg est mesurée selon la norme ASTM D3418 (1999). La macrostructure (Mw, Mn et Ip) de la résine hydrocarbonée est déterminée par chromatographie d'exclusion stérique (SEC) : solvant tétrahydrofurane ; température 35°C ; concentration 1 g/l ; débit 1 ml/min ; solution filtrée sur filtre de porosité 0,45 $\mu$m avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

Les résines hydrocarbonées peuvent être aliphatiques, ou aromatiques ou encore du type aliphatique/ aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). De préférence, la résine plastifiante hydrocarbonée a une température de transition vitreuse supérieure à 20°C.

Avantageusement, la résine plastifiante hydrocarbonée présente au moins une quelconque des caractéristiques suivantes, plus préférentiellement toutes :

- une Tg supérieure à 30°C ;
- une masse moléculaire moyenne en nombre (Mn) comprise entre 300 et 2000 g/mol, plus préférentiellement entre 400 et 1500 g/mol ;
- un indice de polymolécularité (Ip) inférieur à 3, plus préférentiellement inférieur à 2 (rappel : Ip = Mw/Mn avec Mw masse moléculaire moyenne en poids).

De préférence, la résine plastifiante hydrocarbonée est choisie dans le groupe constitué par les résines d'homopolymère de cyclopentadiène, les résines de copolymère de cyclopentadiène, les résines d'homopolymère de dicyclopentadiène, les résines de copolymère de dicyclopentadiène, les résines d'homopolymère de terpène, les résines de copolymère de terpène, les résines d'homopolymère de coupe C5, les résines de copolymère de coupe C5, les résines d'homopolymère de coupe C9, les résines de copolymère de coupe C9, les résines hydrogénées d'homopolymère de cyclopentadiène et les résines hydrogénées de copolymère de cyclopentadiène.

De manière plus préférentielle, la résine plastifiante hydrocarbonée est une résine de copolymère de coupe C9 ou une résine de copolymère de dicyclopentadiène, hydrogénée ou non. A titre d'exemple, on peut citer tout particulièrement les résines de copolymères de coupe C9 et de dicyclopentadiène hydrogénée.

Les agents plastifiants liquides hydrocarbonés sont connus pour ramollir une composition de caoutchouc en diluant l'élastomère et la charge renforçante de la composition de caoutchouc. Leur Tg est typiquement inférieure à -20°C, préférentiellement inférieure à -40°C. Toute huile d'extension hydrocarbonée ou tout agent plastifiant liquide hydrocarboné pour ses propriétés plastifiantes vis-à-vis d'élastomères diéniques est utilisable. A température ambiante (23°C), ces plastifiants ou ces huiles, plus ou moins visqueux, sont des liquides (c'est-à-dire, pour rappel, des substances ayant la capacité de prendre à terme la forme de leur contenant), par opposition notamment aux résines plastifiantes hydrocarbonées qui sont par nature solides à température ambiante.

Comme agents plastifiants liquides hydrocarbonés, on peut citer les polymères diéniques liquides, les huiles polyoléfiniques, les huiles naphténiques, les huiles paraffiniques, les huiles DAE, les huiles MES (Medium Extracted Solvates), les huiles TDAE (Treated Distillate Aromatic Extracts), les huiles RAE (Residual Aromatic Extract oils), les huiles TRAE (Treated Residual Aromatic Extract) et les huiles SRAE (Safety Residual Aromatic Extract oils), les huiles minérales, et les mélanges de ces composés.

De préférence, l'agent plastifiant liquide hydrocarboné est choisi dans le groupe constitué par les polymères diéniques liquides, les huiles polyoléfiniques aliphatiques, les huiles paraffiniques, les huiles MES, les huiles TDAE, les huiles TRAE, les huiles SRAE, les huiles minérales et leurs mélanges. De manière plus préférentielle, l'agent plastifiant liquide hydrocarboné est un polymère diénique liquide, une huile polyoléfine aliphatique, une huile paraffinique, une huile MES ou leurs mélanges.

Selon un mode de réalisation particulier de l'invention, le ratio massique entre le taux de résine plastifiante hydrocarbonée et le taux total de résine plastifiante hydrocarbonée et d'agent plastifiant liquide hydrocarboné est supérieur à 0,4. Ce mode de réalisation particulier est aussi favorable à l'amélioration du comportement routier d'un pneumatique dont la bande de roulement comprend une telle composition de caoutchouc.

Le système plastifiant peut contenir, généralement en petite quantité, un autre agent plastifiant autre que la résine plastifiante hydrocarbonée et l'agent plastifiant liquide hydrocarboné utiles aux besoins de l'invention, dans la mesure où le compromis de performance recherché ne soit pas altéré. Cet autre agent plastifiant peut être par exemple un agent de mis en oeuvre traditionnellement utilisé en faible quantité pour favoriser par exemple la dispersion de la silice. Selon l'un quelconque des modes de réalisation de l'invention, la résine plastifiante hydrocarbonée et l'agent plastifiant liquide hydrocarboné représentent avantageusement sensiblement l'essentiel du système plastifiant, c'est-à-dire le ratio entre le taux de résine plastifiante hydrocarbonée et d'agent plastifiant liquide hydrocarboné sur le taux du système plastifiant total dans la composition de caoutchouc des parties latérales, les taux étant exprimés en pce est supérieur à 0,8, très avantageusement supérieur à 0,9.

Selon une caractéristique avantageuse de la composition caoutchouteuse des parties latérales, le ratio massique entre le taux de charge renforçante et le taux total de résine plastifiante hydrocarbonée et d'agent plastifiant liquide hydrocarboné est supérieur ou égal à 1,1, et de préférence supérieur à 1,2, les taux étant exprimés en pce. La composition des parties latérales selon ce mode particulier apporte une rigidification au sein de la bande de roulement, ce qui permet d'améliorer le comportement routier d'un pneumatique dont la bande de roulement présente une surface très adhérente en raison de l'utilisation d'une composition de caoutchouc hautement déformable et destinée à entrer au contact du sol.

La composition de caoutchouc des parties latérales peut comporter également tout ou partie des additifs usuels habituellement utilisés dans les compositions d'élastomères destinées à la fabrication de pneumatiques, notamment des pigments, des agents de protection tels que cires anti-ozone, anti-ozonants chimiques, anti-oxydants, un système de réticulation qui peut être à base soit de soufre, soit de donneurs de soufre et/ou de peroxyde et/ou de bismaléimides, des accélérateurs ou retardateurs de vulcanisation, des activateurs de vulcanisation.

Le système de réticulation proprement dit est préférentiellement un système de vulcanisation, c'est-à-dire à base de soufre et d'un accélérateur primaire de vulcanisation. Le soufre est typiquement apporté sous forme de soufre moléculaire ou d'un agent donneur de soufre, de préférence sous forme moléculaire. Le soufre sous forme moléculaire est aussi désigné sous l'appellation de soufre moléculaire. On entend par donneur de soufre tout composé qui libère des atomes de soufre, combinés ou pas sous la forme d'une chaîne polysulfure, aptes à s'insérer dans les chaînes polysulfures formés au cours de la vulcanisation et pontant les chaînes élastomères. Au système de vulcanisation viennent s'ajouter, incorporés au cours de la première phase non-productrice et/ou au cours de la phase productive, divers accélérateurs secondaires ou activateurs de vulcanisation connus tels qu'oxyde de zinc, acide stéarique, dérivés guanidiques (en particulier diphénylguanidine), etc. Le taux de soufre est de préférence compris entre 0,5 et 3,0 pce, celui de l'accélérateur primaire est de préférence compris entre 0,5 et 5,0 pce. Ces taux préférentiels peuvent s'appliquer à l'un quelconque des modes de réalisation de l'invention.

On peut utiliser comme accélérateur de vulcanisation (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types sulfénamides pour ce qui est des accélérateurs primaires, du type thiurames, dithiocarbamates, dithiophosphates, thiourées et xanthates pour ce qui est des accélérateurs secondaires. A titre d'exemples d'accélérateurs primaires, on peut citer notamment les composés sulfénamides tels que la N-cyclohexyl-2-benzothiazyle sulfénamide ("CBS"), la N,N-dicyclohexyl-2-benzothiazyle sulfénamide ("DCBS"), la N-ter-butyl-2-benzothiazyle sulfénamide ("TBBS"), et les mélanges de ces composés. L'accélérateur primaire est préférentiellement une sulfénamide, plus préférentiellement la N-cyclohexyl-2-benzothiazyle sulfénamide. A titre d'exemple d'accélérateurs secondaires, on peut citer notamment les disulfures de thiurame tels que le disulfure de tétraéthylthiurame, le disulfure de tétrabutylthiurame ("TBTD"), le disulfure de tétrabenzylthiurame ("TBZTD") et les mélanges de ces composés. L'accélérateur secondaire est préférentiellement un disulfure de thiurame, plus préférentiellement le disulfure de tétrabenzylthiurame.

La réticulation (ou cuisson), le cas échéant la vulcanisation, est conduite de manière connue à une température

généralement comprise entre 130°C et 200°C, pendant un temps suffisant qui peut varier par exemple entre 5 et 90 min en fonction notamment de la température de cuisson, du système de réticulation adopté et de la cinétique de réticulation de la composition considérée.

La composition de caoutchouc, avant réticulation, peut être fabriquée dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 110°C et 190°C, de préférence entre 130°C et 180°C, suivie d'une seconde phase de travail mécanique (parfois qualifiée de phase "productive") à plus basse température, typiquement inférieure à 110°C, par exemple entre 40°C et 100°C, phase de finition au cours de laquelle est incorporé le soufre ou le donneur de soufre et l'accélérateur de vulcanisation.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de mise en oeuvre complémentaires et autres additifs divers, à l'exception système de réticulation. La durée totale du malaxage, dans cette phase non-productive, est de préférence comprise entre 1 et 15 min. Après refroidissement du mélange ainsi obtenu au cours de la première phase non-productive, on incorpore alors le à basse température, généralement dans un mélangeur externe tel qu'un mélangeur à cylindres; le tout est alors mélangé (phase productive) pendant quelques minutes, par exemple entre 2 et 15 min.

La composition de caoutchouc peut être calandrée ou extrudée sous la forme d'une feuille ou d'une plaque, notamment pour une caractérisation au laboratoire, ou encore sous la forme d'un semi-fini (ou profilé) de caoutchouc utilisable dans un pneumatique. La composition peut être soit à l'état cru (avant réticulation ou vulcanisation), soit à l'état cuit (après réticulation ou vulcanisation), peut être un produit semi-fini qui peut être utilisé dans un pneumatique.

Détermination de la microstructure des élastomères :

La microstructure des élastomères est déterminée par analyse RMN 1H, supplée par l'analyse RMN 13C lorsque la résolution des spectres RMN du 1H ne permet pas l'attribution et la quantification de toutes les espèces. Les mesures sont réalisées à l'aide d'un spectromètre RMN BRUKER 500MHz à des fréquences de 500.43 MHz pour l'observation du proton et 125.83MHz pour l'observation du carbone.

Pour les élastomères non solubles mais ayant la capacité de gonfler dans un solvant, est utilisée une sonde HRMAS 4mm z-grad permettant d'observer le proton et le carbone en mode découplé du proton. Les spectres sont acquis à des vitesses de rotation de 4000Hz à 5000Hz.

Pour les mesures sur des élastomères solubles, est utilisée une sonde RMN liquide permettant d'observer le proton et le carbone en mode découplé du proton.

La préparation des échantillons non solubles est faite dans des rotors remplis avec le matériau analysé et un solvant deutéré permettant le gonflement, en général du chloroforme deutéré (CDCl3). Le solvant utilisé doit toujours être deutéré et sa nature chimique peut être adaptée par l'homme du métier. Les quantités de matériau utilisées sont ajustées de façon à obtenir des spectres avec une sensibilité et une résolution suffisante.

Les échantillons solubles sont mis en solution dans un solvant deutéré (environ 25mg d'élastomère dans 1mL), en général du chloroforme deutéré (CDCl3). Le solvant ou coupage de solvant utilisé doit toujours être deutéré et sa nature chimique peut être adaptée par l'homme du métier.

Dans les deux cas (échantillon soluble ou échantillon gonflé) :

Pour la RMN du proton est utilisée une séquence simple impulsion de 30°. La fenêtre spectrale est réglée pour observer l'ensemble des raies de résonances appartenant aux molécules analysées. Le nombre d'accumulation est réglé afin d'obtenir un rapport signal sur bruit suffisant pour la quantification de chaque motif. Le délai de recyclage entre chaque impulsion est adapté pour obtenir une mesure quantitative.

Pour la RMN du carbone est utilisée une séquence simple impulsion 30° avec un découplage du proton uniquement pendant l'acquisition pour éviter les effets « Overhauser Nucléaire » (NOE) et rester quantitatif. La fenêtre spectrale est réglée pour observer l'ensemble des raies de résonances appartenant aux molécules analysées. Le nombre d'accumulation est réglé afin d'obtenir un rapport signal sur bruit suffisant pour la quantification de chaque motif. Le délai de recyclage entre chaque impulsion est adapté pour obtenir une mesure quantitative.

Les mesures de RMN sont réalisées à 25°C.

Détermination de la viscosité Mooney :

La viscosité Mooney est mesurée à l'aide d'un consistomètre oscillant tel que décrit dans la norme ASTM D1646 (1999). La mesure se fait selon le principe suivant : l'échantillon analysé à l'état cru (i.e., avant cuisson) est moulé (mis en forme) dans une enceinte cylindrique chauffée à une température donnée (100°C). Après 1 minute de préchauffage, le rotor tourne au sein de l'éprouvette à 2 tours/minute et on mesure le couple utile pour entretenir ce mouvement après 4 minutes de rotation. La viscosité Mooney est exprimée en "unité Mooney" (UM, avec 1 UM=0,83 Newton.mètre).

L'évaluation de la rigidité des compositions de caoutchouc a été évaluée par la détermination du module de cisaillement dynamique G*. On enregistre la réponse d'un échantillon de composition vulcanisée soumis à une sollicitation sinusoïdale de cisaillement alterné à contrainte imposée de 0,7 MPa et à une fréquence de 10 Hz, lors d'un balayage

en température, d'une température minimale inférieure à la Tg des élastomères des compositions jusqu'à une température maximale supérieure à 100°C ; les valeurs de G* sont prises à la température de 60°C.

Six compositions de caoutchouc T1 et M1 à M5 dont le détail de la formulation figure dans le tableau 1, ont été préparées de la manière suivante :

On introduit dans un mélangeur interne (taux de remplissage final : environ 70% en volume), dont la température initiale de cuve est d'environ 80°C, successivement les élastomères, les charges renforçantes, ainsi que les divers autres ingrédients à l'exception du soufre et de l'accélérateur de vulcanisation. On conduit alors un travail thermomécanique (phase non-productive) en une étape, qui dure au total environ 3 à 4 min, jusqu'à atteindre une température maximale de « tombée » de 165°C. On récupère le mélange ainsi obtenu, on le refroidit puis on incorpore le soufre et l'accélérateur de vulcanisation sur un mélangeur (homo-finisseur) à 30 °C, en mélangeant le tout (phase productive) pendant un temps approprié (par exemple une dizaine de minutes).

Les compositions ainsi obtenues sont ensuite calandrées soit sous la forme de plaques (épaisseur 2 à 3mm) ou de feuilles fines de caoutchouc pour la mesure de leur propriétés physiques ou mécaniques, soit extrudées pour former par exemple un profilé pour un pneumatique

Le tableau 1 ci-dessous décrit une composition de caoutchouc T1 de l'état de la technique, utilisé comme mélange de la partie centrale de la bande de roulement ainsi que cinq compositions conformes à l'invention pour des mélanges des parties latérales.

Les cinq compositions de caoutchouc M1 à M5 contiennent toutes un copolymère d'éthylène et de 1,3-butadiène dans lequel le taux d'unité éthylène est supérieur à 50%. Dans la composition M5, le copolymère porte une fonction silanol ou alcoxysilane en extrémité de chaîne.

Le copolymère d'éthylène et de 1,3-butadiène (EBR) utilisé dans les compositions M1 à M4 est préparé selon le mode opératoire suivant :

Dans un réacteur contenant du méthylcyclohexane, on ajoute le co-catalyseur, le butyloctylmagnésium (BOMAG) (0,00021 mol/L) puis le métallocène [{Me2SiFlu2Nd(μ-BH4)2Li(THF)}2] (0,07 mol/L), le symbole Flu représentant le groupe C13H8. La durée d'alkylation est de 10 minutes, la température de réaction est de 20 °C. Ensuite, les monomères sous la forme d'un mélange gazeux de composition molaire éthylène/1,3-butadiène : 80/20 sont ajoutés de manière continue. La polymérisation est conduite dans des conditions de température et de pression constante 80°C et 8 bars. La réaction de polymérisation est stoppée par refroidissement, dégazage du réacteur et ajout d'éthanol. Un anti-oxydant est ajouté à la solution de polymère. Le copolymère est récupéré par séchage en étuve sous vide jusqu'à masse constante.

Dans le copolymère EBR, le taux molaire en unité éthylène est de 79%, le taux molaire en unité 1,4 est de 6%, le taux molaire en unité 1,2 est de 8%, le taux molaire en unité 1,2-cyclohexanediyle est de 7%. La viscosité Mooney est de 85.

Pour le copolymère EBR-F utilisé dans la composition de caoutchouc M5, le copolymère est préparé selon le même opératoire que le copolymère EBR à une différence près qui est la suivante :

Lorsque la conversion en monomères souhaitée est atteinte, le contenu du réacteur est dégazé puis l'agent de fonctionnalisation, le (N,N-diméthyl-3-aminopropyl)méthyldiméthoxysilane, est introduit sous atmosphère inerte par surpression. Le milieu réactionnel est agité pendant un temps de 15 minutes et une température de 80°C. Après réaction, le milieu est dégazé puis précipité dans du méthanol. Les polymères sont remis en solution dans du toluène, puis précipité dans le méthanol de manière à éliminer les molécules « silane » non greffés, ce qui permet d'améliorer la qualité des signaux des spectres pour la quantification du taux de fonction et l'intégration des différents signaux. Le polymère est antioxydé, puis séché à 60°C sous vide jusqu'à masse constante.

Dans le copolymère EBR-F, le taux molaire en unité éthylène est de 76 %, le taux molaire en unité 1,4 est de 6 %, le taux molaire en unité 1,2 est de 9 %, le taux molaire en unité 1,2-cyclohexanediyle est de 9 %. La viscosité Mooney est de 84.

**Tableau 1**

| Composition | T1 | M1 | M2 | M3 | M4 | M5 |
|---|---|---|---|---|---|---|
| SBR (1) | 100 | | | | | |
| EBR (2) | | 100 | 100 | 100 | 100 | |
| EBR-F (3) | | | | | | 100 |
| Noir de carbone (4) | 5 | 3 | 3 | 3 | 3 | 3 |
| Silice (5) | 110 | 75 | 91 | 63 | 83 | 63 |
| Huile (6) | 20 | | | | | |
| Résine (7) | 50 | | | | | |

(suite)

| Composition | T1 | M1 | M2 | M3 | M4 | M5 |
|---|---|---|---|---|---|---|
| Agent plastifiant liquide (8) | | 38 | 26 | 10 | 20 | 23 |
| Résine plastifiante (9) | | 32 | 31 | 25 | 23 | 23 |
| Antioxydant (10) | | 2 | 2 | 2 | 2 | 2 |
| Cire antiozonante | | 1,6 | 1,6 | 1,6 | 1,6 | 1,6 |
| Agent de couplage (11) | 9 | 6 | 7 | 5 | 7 | 5 |
| Acide stéarique (12) | 2 | 2 | 2 | 2 | 2 | 2 |
| Oxyde de zinc (13) | 3 | 1 | 1 | 1 | 1 | 1 |
| DPG (14) | 2 | 1,5 | 1,8 | 1,2 | 1,5 | 1,2 |
| CBS (15) | 2 | 2 | 2 | 2 | 2 | |
| Soufre | 1 | 1 | 1 | 1 | 1 | 1,6 |
| TBzTD (16) | | | | | | 2 |

(1) SBR - 27% de styrène ; butadiène 1,2 5 % ; cis-1,4 15 % ; trans-1,4 80 % ; Tg -48°C ;
(2) Copolymère d'éthylène et d'un 1,3-butadiène non fonctionnel (EBR) ;
(3) Copolymère d'éthylène et d'un 1,3-butadiène fonctionnel (EBR-F) ;
(4) N234 selon la norme ASTM D-1765 ;
(5) « Zeosil 1165 MP » de Solvay-Rhodia sous forme de microperles ;
(6) Huile TDAE « flexon 630 » de Shell ;
(7) Résine « Escorez 2173 » de Exxon ;
(8) MES/HPD (Catenex SNR de Shell) ;
(9) Résine hydrocarbonée C9/Dicyclopentadiène «Escorez 5600» de EXXON (Tg = 55°C) ;
(10) N-1,3-diméthylbutyl-N-phénylparaphénylènediamine (« Santoflex 6-PPD » de Flexsys) ;
(11) TESPT (« Si69 » de Evonik) ;
(12) Stéarine « Pristerene 4931 » de Uniqema ;
(13) Oxyde de zinc de grade industriel d'Umicore ;
(14) Diphénylguanidine ;
(15) N-cyclohexyl-2-benzothiazyle sulfénamide (« Santocure CBS » de la société Flexsys) ;
(16) Disulfure de tétrabenzylthiurame ("Perkacit TBzTD" de Flexsys).

Le tableau 2 ci-dessous présente les valeurs de rapport entre le taux de charge et le taux de système plastifiant.

**Tableau 2**

| Composition | T1 | M1 | M2 | M3 | M4 | M5 |
|---|---|---|---|---|---|---|
| Rapport taux de charge / système plastifiant | 1,6 | 1,1 | 1,6 | 1,9 | 2 | 1,4 |

Le tableau 3 ci-dessous présente les caractéristiques de rigidité des six mélanges présentés.

**Tableau 3**

| Composition | T1 | M1 | M2 | M3 | M4 | M5 |
|---|---|---|---|---|---|---|
| Réf. Interne DDT | WO2016/ 202702 | DF059 | CW838 M07 | CW554 | CL895 | DN538 |
| Module G* à 60°C (MPa) | 0,9 | 1,2 | 1,7 | 1,7 | 2,3 | 1,3 |
| Module G* à 60°C (base 100) | 100 | 133 | 189 | 193 | 256 | 144 |

Le tableau 3 ci-dessus décrit une composition de caoutchouc T1 de l'état de la technique, utilisée comme mélange de partie centrale de la bande de roulement ainsi que cinq compositions conformes à l'invention pour des mélanges aptes à constituer des parties latérales de bande de roulement.

La composition de caoutchouc T1 comprend 100 pce de SBR et a un module de cisaillement dynamique de 0,9 MPa, ce qui rend cette composition apte à procurer au pneumatique une excellente adhérence due notamment à une aire de contact élevée sur sol rugueux.

Les quatre premières compositions M1 à M4 conformes à l'invention pour les parties latérales de bande de roulement comprennent 100 pce de l'élastomère diénique EBR précédemment décrit et la composition M5 comprend 100 pce de l'élastomère diénique EBR-F tel que précédemment décrit.

Ces cinq compositions ont un module de cisaillement dynamique compris entre 1,2 et 2,3 MPa ce qui les rend apte à rigidifier la bande de roulement et ainsi améliorer le comportement routier du pneumatique, tout en permettant leur utilisation en contact avec un sol de roulage à l'état neuf et à l'état usé de la bande de roulement du pneumatique.

Il est à noter que le rapport taux de charge / taux du système plastifiant varie entre 1,1 et 2 (tableau 2).

Enfin, les taux de charge de ces compositions sont beaucoup plus faibles que ceux de la composition T1 ce qui permet une diminution sensible de leur hystérésis.

## Revendications

1. Pneumatique (1) ayant un axe de rotation et un plan médian perpendiculaire à l'axe de rotation, et comprenant deux bourrelets (4), deux flancs (3) reliés aux bourrelets, un sommet (2) relié aux extrémités des deux flancs avec une armature de sommet (6), et une bande de roulement radialement extérieure, ladite bande de roulement étant séparée axialement en au moins trois parties, une partie centrale et deux parties latérales, **caractérisé en ce que** la composition caoutchouteuse desdites parties latérales comprend plus de 50 pce d'un copolymère d'éthylène et d'un 1,3-diène, une charge renforçante et un système plastifiant, le 1,3-diène étant le 1,3-butadiène ou l'isoprène et les unités éthylène dans le copolymère représentant plus de 50 % en mole de l'ensemble des unités monomères dudit copolymère.

2. Pneumatique (1) selon la revendication 1, dans lequel, la bande de roulement comprenant une pluralité d'éléments de sculpture avec des faces latérales et une face de contact destinée à venir en contact avec la chaussée pendant le roulage du pneumatique et une pluralité de rainures circonférentielles chacune délimitée par des faces latérales d'éléments de sculpture adjacents, en vis-à-vis l'une par rapport à l'autre, et délimitée par un fond, la partie centrale s'étend axialement de part et d'autre du plan médian du pneumatique au-delà de la pluralité de rainures circonférentielles.

3. Pneumatique (1) selon la revendication 1, dans lequel, la bande de roulement comprenant une pluralité d'éléments de sculpture avec des faces latérales et une face de contact destinée à venir en contact avec la chaussée pendant le roulage du pneumatique et une pluralité de rainures circonférentielles chacune délimitée par des faces latérales d'éléments de sculpture adjacents, en vis-à-vis l'une par rapport à l'autre, et délimitée par un fond, la partie centrale s'étend axialement jusqu'à la rainure circonférentielle axialement la plus extérieure, au moins d'un côté et de préférence de part et d'autre du plan médian du pneumatique.

4. Pneumatique (1) selon l'une quelconque des revendications précédentes, dans lequel la partie centrale s'étend axialement jusqu'à la rainure circonférentielle axialement la plus extérieure de part et d'autre du plan médian du pneumatique, et dans lequel ladite partie centrale inclut les fonds desdites rainures circonférentielles.

5. Pneumatique (1) selon l'une quelconque des revendications précédentes, dans lequel, ladite bande de roulement comportant une première couche C1 radialement intérieure et une deuxième couche C2 radialement extérieure, les parties latérales de ladite première couche C1 constituent lesdites parties latérales et ladite deuxième couche C2 constitue ladite partie centrale.

6. Pneumatique (1) selon l'une quelconque des revendications précédentes, dans lequel le 1,3-diène est le 1,3-butadiène.

7. Pneumatique (1) selon l'une quelconque des revendications précédentes, dans lequel le copolymère contient des unités de formule (I) ou des unités de formule (II-1) ou encore des unités de formule (I) et de formule (II-1) telles que :

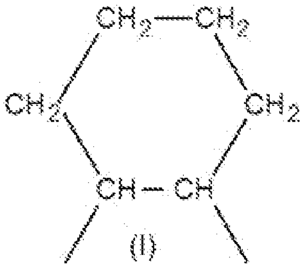

(I)

$-CH_2-CH(CH=CH_2)-$

(II-1)

**8.** Pneumatique (1) selon la revendication 7 dans lequel les pourcentages molaires des unités de formule (I) et des unités de formule (II-1) dans le copolymère, respectivement o et p, satisfont à l'équation suivante (éq. 1), de manière préférentielle à l'équation (éq. 2), o et p étant calculés sur la base de l'ensemble des unités monomères du copolymère, avec :

$$0 < o+p \leq 25 \qquad (\text{éq. 1})$$

$$0 < o+p < 20 \qquad (\text{éq. 2})$$

**9.** Pneumatique selon l'une quelconque des revendications précédentes, dans lequel la charge renforçante de la composition caoutchouteuse des parties latérales comporte de 35 à 100 pce d'une charge renforçante qui comprend une silice.

**10.** Pneumatique selon l'une quelconque des revendications précédentes, dans lequel le système plastifiant de la composition caoutchouteuse des parties latérales comporte une résine plastifiante hydrocarbonée et un agent plastifiant liquide hydrocarboné, le taux total de résine plastifiante hydrocarbonée et d'agent plastifiant liquide hydrocarboné étant supérieur à 10 pce et inférieur ou égal à 80 pce.

**11.** Pneumatique selon l'une quelconque des revendications précédentes, dans lequel le ratio massique entre le taux de charge renforçante et le taux du système plastifiant de la composition caoutchouteuse des parties latérales est supérieur ou égal à 1,1 et de préférence supérieur à 1,2.

**12.** Pneumatique (1) selon l'une quelconque des revendications précédentes, dans lequel le copolymère d'éthylène et d'un 1,3-diène est le seul élastomère de la composition caoutchouteuse desdites parties latérales.

**13.** Pneumatique (1) selon l'une quelconque des revendications précédentes, dans lequel la composition caoutchouteuse de la partie centrale comprend moins de 50 pce d'un copolymère d'éthylène et d'un 1,3-diène selon l'une quelconque des revendications 1 à 12.

**14.** Pneumatique (1) selon l'une quelconque des revendications précédentes, dans lequel le module de cisaillement dynamique de la composition caoutchouteuse des parties latérales est compris entre 1 et 2,5 MPa, le module de cisaillement dynamique étant mesuré à 60°C lors d'un balayage en température à une contrainte imposée de 0,7 MPa et à une fréquence de 10 Hz.

**15.** Pneumatique (1) selon l'une quelconque des revendications précédentes, dans lequel le rapport K entre le module de cisaillement dynamique de la composition caoutchouteuse des parties latérales et le module de cisaillement dynamique de la composition caoutchouteuse de la partie centrale est supérieur à 1,1 et de préférence supérieur à 1,2, les modules de cisaillement dynamiques étant mesurés à 60°C lors d'un balayage en température à une contrainte imposée de 0,7 MPa et à une fréquence de 10 Hz.

**Patentansprüche**

**1.** Luftreifen (1), der eine Drehachse und eine senkrecht zu der Drehachse verlaufende Mittelebene hat und zwei Wülste (4), zwei mit den Wülsten verbundene Flanken (3), einen mit den Enden der beiden Flanken verbundenen Scheitel (2) mit einer Scheitelbewehrung (6) und einen radial äußeren Laufstreifen umfasst, wobei der Laufstreifen

axial in mindestens drei Teile, einen mittleren Teil und zwei seitliche Teile, geteilt ist, **dadurch gekennzeichnet, dass** die Kautschukzusammensetzung der seitlichen Teile mehr als 50 phr eines Copolymers aus Ethylen und einem 1,3-Dien, einen verstärkenden Füllstoff und ein Weichmachersystem umfasst, wobei das 1,3-Dien das 1,3-Butadien oder das Isopren ist und die Ethyleneinheiten in dem Copolymer mehr als 50 Mol-% der Gesamtheit der Monomereinheiten des Copolymers ausmachen.

2. Luftreifen (1) nach Anspruch 1, bei dem, wenn der Laufstreifen eine Mehrzahl von Profilelementen mit Seitenflächen und einer Kontaktfläche, die dazu bestimmt ist, während des Rollens des Luftreifens mit der Fahrbahn in Kontakt zu gelangen, und eine Mehrzahl von Umfangsrillen, die jeweils durch Seitenflächen benachbarter Profilelemente begrenzt werden, die einander gegenüberliegen, und durch einen Boden begrenzt werden, umfasst, der mittlere Teil sich axial beidseits der Mittelebene des Luftreifens jenseits der Mehrzahl von Umfangsrillen erstreckt.

3. Luftreifen (1) nach Anspruch 1, bei dem, wenn der Laufstreifen eine Mehrzahl von Profilelementen mit Seitenflächen und einer Kontaktfläche, die dazu bestimmt ist, während des Rollens des Reifens mit der Fahrbahn in Kontakt zu gelangen, und eine Mehrzahl von Umfangsrillen, die jeweils durch Seitenflächen benachbarter Profilelemente begrenzt werden, die einander gegenüberliegen, und durch einen Boden begrenzt werden, umfasst, der mittlere Teil sich axial bis zu der Umfangsrille erstreckt, die mindestens auf einer Seite und bevorzugt beidseits der Mittelebene des Luftreifens axial am weitesten außen liegt.

4. Luftreifen (1) nach einem der vorhergehenden Ansprüche, bei dem sich der mittlere Teil axial bis zu der Umfangsrille erstreckt, die beidseits der Mittelebene des Luftreifens axial am weitesten außen liegt, und bei dem der mittlere Teil die Böden der Umfangsrillen mit einschließt.

5. Luftreifen (1) nach einem der vorhergehenden Ansprüche, bei dem, wenn der Laufstreifen eine radial innere erste Schicht C1 und eine radial äußere zweite Schicht C2 beinhaltet, die seitlichen Teile der ersten Schicht C1 die seitlichen Teile bilden und die zweite Schicht C2 den mittleren Teil bildet.

6. Luftreifen (1) nach einem der vorhergehenden Ansprüche, bei dem das 1,3-Dien das 1,3-Butadien ist.

7. Luftreifen (1) nach einem der vorhergehenden Ansprüche, bei dem das Copolymer Einheiten mit der Formel (I) oder Einheiten mit der Formel (II-1) oder aber Einheiten mit der Formel (I) und mit der Formel (II-1) enthält wie:

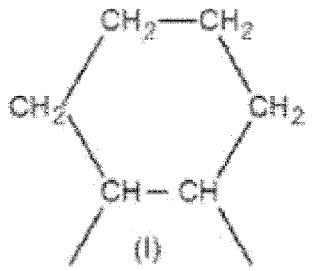

(I)

$-CH_2-CH(CH=CH_2)-$

(II-1)

8. Luftreifen (1) nach Anspruch 7, bei dem die molaren Prozentanteile der Einheiten mit der Formel (I) und der Einheiten mit der Formel (II-1) in dem Copolymer, o beziehungsweise p, die folgende Gleichung (Gl. 1), bevorzugt die Gleichung (Gl. 2), erfüllen, wobei o und p auf der Basis der Gesamtheit der Monomereinheiten des Copolymers berechnet werden, mit: $0 < o+p \leq 25$ (Gl. 1) $0 < o+p < 20$ (Gl. 2)

9. Luftreifen nach einem der vorhergehenden Ansprüche, bei dem der verstärkende Füllstoff der Kautschukzusammensetzung der seitlichen Teile 35 bis 100 phr eines verstärkenden Füllstoffs beinhaltet, der ein Siliciumdioxid umfasst.

10. Luftreifen nach einem der vorhergehenden Ansprüche, bei dem das Weichmachersystem der Kautschukzusammensetzung der seitlichen Teile ein kohlenwasserstoffhaltiges Weichmacherharz und ein kohlenwasserstoffhaltiges flüssiges Weichmachermittel beinhaltet, wobei der Gesamtgehalt des kohlenwasserstoffhaltigen Weichmacherharzes und des kohlenwasserstoffhaltigen flüssigen Weichmachermittels größer als 10 phr und kleiner oder gleich 80 phr ist.

11. Luftreifen nach einem der vorhergehenden Ansprüche, bei dem das Massenverhältnis zwischen dem Gehalt an

verstärkendem Füllstoff und dem Gehalt des Weichmachersystems der Kautschukzusammensetzung der seitlichen Teile größer oder gleich 1,1 und bevorzugt größer als 1,2 ist.

**12.** Luftreifen (1) nach einem der vorhergehenden Ansprüche, bei dem das Copolymer aus Ethylen und einem 1,3-Dien das einzige Elastomer der Kautschukzusammensetzung der seitlichen Teile ist.

**13.** Luftreifen (1) nach einem der vorhergehenden Ansprüche, bei dem die Kautschukzusammensetzung des mittleren Teils weniger als 50 phr eines Copolymers aus Ethylen und einem 1,3-Dien nach einem der Ansprüche 1 bis 12 umfasst.

**14.** Luftreifen (1) nach einem der vorhergehenden Ansprüche, bei dem der dynamische Schermodul der Kautschukzusammensetzung der seitlichen Teile zwischen 1 und 2,5 MPa beträgt, wobei der dynamische Schermodul bei 60 °C bei einem Temperatur-Sweep bei einer vorgegebenen Belastung von 0,7 MPa und bei einer Frequenz von 10 Hz gemessen wird.

**15.** Luftreifen (1) nach einem der vorhergehenden Ansprüche, bei dem das Verhältnis K zwischen dem dynamischen Schermodul der Kautschukzusammensetzung der seitlichen Teile und dem dynamischen Schermodul der Kautschukzusammensetzung des mittleren Teils größer als 1,1 und bevorzugt größer als 1,2 ist, wobei die dynamischen Schermodule bei 60 °C bei einem Temperatur-Sweep bei einer vorgegebenen Belastung von 0,7 MPa und bei einer Frequenz von 10 Hz gemessen werden.

## Claims

**1.** Tyre (1) having an axis of rotation and a median plane perpendicular to the axis of rotation, and comprising two beads (4), two sidewalls (3) connected to the beads, a crown (2) connected to the ends of the two sidewalls with a crown reinforcement (6), and a radially outer tread, said tread being axially separated into at least three portions, a central portion and two lateral portions, **characterized in that** the rubber composition of said lateral portions comprises more than 50 phr of a copolymer of ethylene and of a 1,3-diene, a reinforcing filler and a plasticizing system, the 1,3-diene being 1,3-butadiene or isoprene and the ethylene units in the copolymer representing more than 50 mol% of all the monomer units of said copolymer.

**2.** Tyre (1) according to Claim 1, in which, the tread comprising a plurality of tread pattern elements with lateral faces and a contact face intended to come into contact with the roadway when the tyre is running and a plurality of circumferential grooves each delimited by lateral faces of adjacent tread pattern elements that face one another, and delimited by a base, the central portion extends axially on either side of the median plane of the tyre beyond the plurality of circumferential grooves.

**3.** Tyre (1) according to Claim 1, in which, the tread comprising a plurality of tread pattern elements with lateral faces and a contact face intended to come into contact with the roadway when the tyre is running and a plurality of circumferential grooves each delimited by lateral faces of adjacent tread pattern elements that face one another, and delimited by a base, the central portion extends axially to the axially outermost circumferential groove, at least on one side and preferably on either side of the median plane of the tyre.

**4.** Tyre (1) according to any one of the preceding claims, in which the central portion extends axially to the axially outermost circumferential groove on either side of the median plane of the tyre, and in which said central portion includes the bases of said circumferential grooves.

**5.** Tyre (1) according to any one of the preceding claims, in which, said tread comprising a radially inner first layer C1 and a radially outer second layer C2, the lateral portions of said first layer C1 constitute said lateral portions and said second layer C2 constitutes said central portion.

**6.** Tyre (1) according to any one of the preceding claims, in which the 1,3-diene is 1,3-butadiene.

**7.** Tyre (1) according to any one of the preceding claims, in which the copolymer contains units of formula (I) or units of formula (II-1) or else units of formula (I) and of formula (II-1) such as:

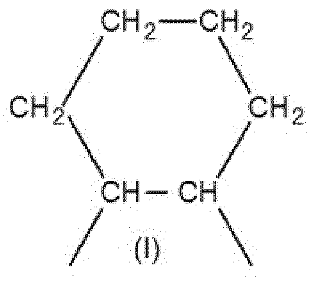

(I)

$$-CH_2-CH(CH=CH_2)-$$

(II-1)

8. Tyre (1) according to Claim 7, in which the molar percentages of the units of formula (I) and of the units of formula (II-1) in the copolymer, respectively o and p, satisfy the following equation (eq. 1), preferentially the equation (eq. 2), o and p being calculated on the basis of all the monomer units of the copolymer, with:

$$0 < o+p \leq 25 \qquad \text{(eq. 1)}$$

$$0 < o+p < 20 \qquad \text{(eq. 2)}$$

9. Tyre according to any one of the preceding claims, in which the reinforcing filler of the rubber composition of the lateral portions comprises from 35 to 100 phr of a reinforcing filler which comprises a silica.

10. Tyre according to any one of the preceding claims, in which the plasticizing system of the rubber composition of the lateral portions comprises a hydrocarbon plasticizing resin and a hydrocarbon liquid plasticizing agent, the total content of hydrocarbon plasticizing resin and hydrocarbon liquid plasticizing agent being greater than 10 phr and less than or equal to 80 phr.

11. Tyre according to any one of the preceding claims, in which the weight ratio between the content of reinforcing filler and the content of the plasticizing system of the rubber composition of the lateral portions is greater than or equal to 1.1 and preferably greater than 1.2.

12. Tyre (1) according to any one of the preceding claims, in which the copolymer of ethylene and of a 1,3-diene is the only elastomer of the rubber composition of said lateral portions.

13. Tyre (1) according to any one of the preceding claims, in which the rubber composition of the central portion comprises less than 50 phr of a copolymer of ethylene and of a 1,3-diene according to any one of Claims 1 to 12.

14. Tyre (1) according to any one of the preceding claims, in which the dynamic shear modulus of the rubber composition of the lateral portions is between 1 and 2.5 MPa, the dynamic shear modulus being measured at 60°C during a temperature sweep at an imposed stress of 0.7 MPa and at a frequency of 10 Hz.

15. Tyre (1) according to any one of the preceding claims, in which the ratio K between the dynamic shear modulus of the rubber composition of the lateral portions and the dynamic shear modulus of the rubber composition of the central portion is greater than 1.1 and preferably greater than 1.2, the dynamic shear moduli being measured at 60°C during a temperature sweep at an imposed stress of 0.7 MPa and at a frequency of 10 Hz.

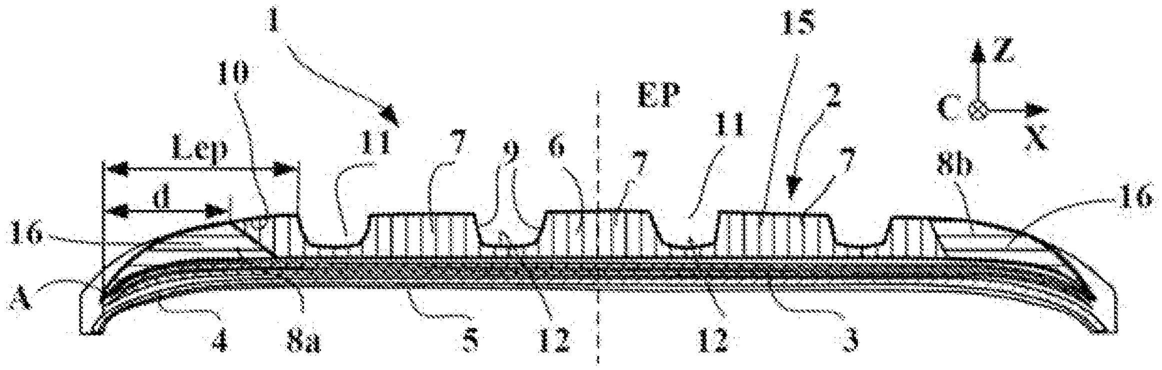


Fig. 1

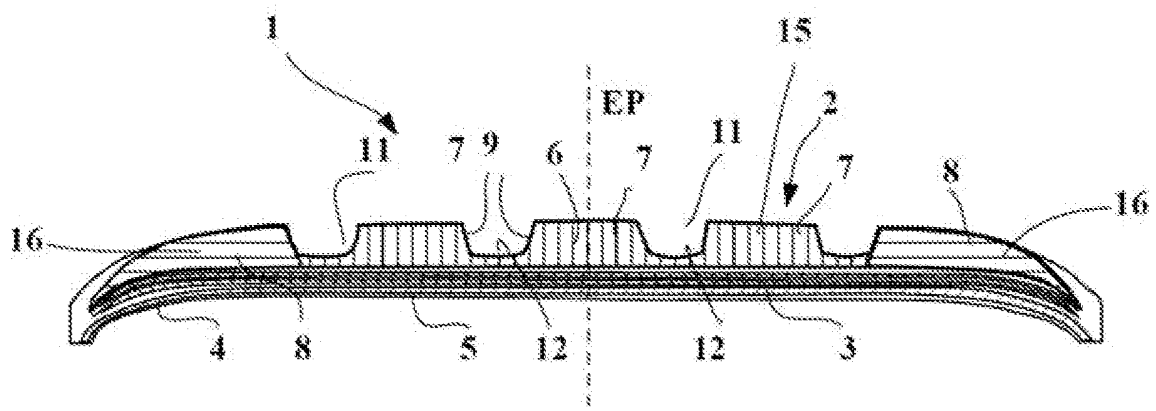


Fig. 2

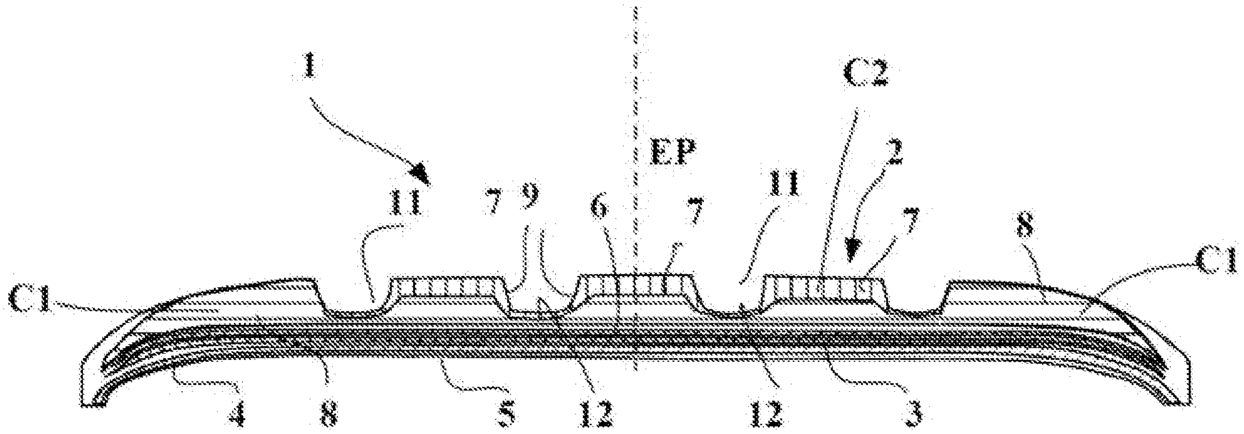


Fig. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 2594413 B1
- WO 2014114607 A1
- WO 0210269 A
- WO 2012084599 A
- JP 2013185048 A
- EP 1092731 A
- WO 2004035639 A
- WO 2007054223 A
- WO 2007054224 A
- WO 2017093654 A1
- WO 2018020122 A1
- WO 2018020123 A1
- FR 2018051305 W
- FR 2018051306 W
- WO 03016215 A1
- WO 03016387 A1
- WO 03002648 A1
- US 2005016651 A1
- WO 03002649 A1
- US 2005016650 A1
- WO 02083782 A1
- US 7217751 B2
- WO 2016202702 A


### Littérature non-brevet citée dans la description


- *The Journal of the American Chemical Society,* Février 1938, vol. 60, 309
- **R. MILDENBERG ; M. ZANDER ; G. COLLIN.** Hydrocarbon Resins. VCH, 1997